# EUROPEAN PATENT APPLICATION

(11) **EP 3 570 201 A1**
(43) Date of publication of application: **20.11.2019**
(21) Application number: 18173239.7
(22) Date of filing: 18.05.2018
(51) Int. Cl.: G06F 21/84, G06F 21/32

(54) **SECURITY DISPLAY SYSTEM AND ASSOCIATED METHOD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A system for securely displaying data in an insecure environment, the system comprising: a private display device for displaying the data and configured to enable a user to exclusively view the data thereon; a biometric sensor associated with the private display device and configured to receive biometric information from the user; and a processing module configured to: determine that the user is an authorised user based at least in part on a comparison of the biometric information received at the biometric sensor with biometric information of one or more authorised users; and permit the data to be displayed to the user on the private display device if the user is determined to be an authorised user.

## Description

The present invention relates to a method and system for securely displaying data to a user in for example an insecure environment.

It is common for users of a shared workplace to work with different types of data via their computer systems. If confidential, sensitive, or high security data is present, a security system may be employed in order to maintain the confidentiality of the data by restricting access to authorised users who have permission to view confidential data. Authorisation may be indicated by associating an appropriate clearance or security level with the user. Unauthorised users will not be able to access the confidential data.

However, in the shared workplace, an authorised user accessing confidential data may display that data via a computer monitor display, resulting in inadvertent exposure of that data to onlookers who aren't authorised. Consequently, the confidentiality of the data is compromised.

In addition to the potential for inadvertent exposure of data, hostile onlookers may attempt to gain access to confidential data in the absence of the authorised user. For example, if the user has been granted access to the confidential data by a security system and subsequently leaves their computer system unattended, the data is at risk of being accessed by others.

Accordingly, one object of the present invention is to provide a system and method to securely display data to users so that the risk of exposing the data to onlookers is reduced.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Aspects of the invention are provided in the independent claims.

A system for securely displaying data in an insecure environment is described. The system uses a private display device and an associated biometric sensor to together display data to an authorised user. The user is determined to be authorised based on biometric information received at the biometric sensor, so that the data is secured in two ways: firstly, the display device used enables a user to exclusively view data thereon, and secondly, a biometric check ensures that unauthorised users are not permitted to view the data on the device.

An aspect provides a system for securely displaying data in an insecure environment. The system comprises: a private display device for displaying the data and configured to enable a user to exclusively view the data thereon; a biometric sensor associated with the private display device and configured to receive biometric information from the user; and a processing module. The processing module is configured to: determine that the user is an authorised user based at least in part on a comparison of the biometric information received at the biometric sensor with biometric information of one or more authorised users; and permit the data to be displayed to the user on the private display device if the user is determined to be an authorised user.

The system usefully enables viewing of data by authorised users in potentially insecure or non-private areas. As a private display device is used, unauthorised viewers are unable to view data while the device is being used, and as biometric information is utilised to determine if the user is an authorised user, unauthorised users are also restricted from viewing data using the device.

The private display device may include the biometric sensor. This is particularly beneficial as it permits the gathering of biometric information by the biometric sensor to be performed while a user is using the private display device, simplifying the process of accessing the data.

Optionally, the biometric sensor is selected from: a retinal scanner; an iris scanner; and an interpupillary distance sensor. The biometric sensor may be configured to receive biometric information when the user is using the private display device. The use of a retinal scanner, iris scanner or interpupillary distance sensor further simplifies the process as the user can use the private display device to perform the biometric test and view the data. This is particularly useful for situations where the private display device has an enclosed eyepiece that the user engages with.

The processing module may be configured to prohibit the data being displayed to the user if the user is not determined to be an authorised user. The processing module may be configured to: receive a request to view the data; determine if the data is considered to be confidential data; and/or in response to determining that the data is considered to be confidential data, permit the data to be displayed to the user on the private display device.

The system may comprise an open display device for displaying the data and configured to enable the user to non-exclusively view the data. The processing module may be configured to: in response to determining that the data is considered to be confidential data, permit the data to be displayed to the user on the private display device and/or prohibit the data from being displayed on the open display device. In response to determining that the data is considered to be non-confidential data, the processing module may be configured to permit the data to be displayed to the user on the private display device and/or the open display device.

The system may comprise a computing device that includes the open display device. The computing device may be in communication with the processing module. The private display device may be in communication with processing module via the computing device.

The system may comprise a data store that stores data for viewing on the private display device. The data store may be accessible to the processing module to enable data to be retrieved and/or displayed to the user.

The system may comprise a biometric data store having the biometric information of one or more authorised users. The biometric data store may be accessible to the processing module to enable comparison of received and stored biometric information.

The system may comprise a further security input device configured to receive further security information. The processing module may be configured to: determine that the user is an authorised user based at least in part on a comparison of the security information received at the security input device with authorisation information of one or more authorised users; permit display of the data on the private display device if the user is determined to be an authorised user; and/or prohibit display of the data to the user if the user is determined to not be an authorised user.

The private display device may comprise a substantially enclosed head-mounted display.

According to another aspect, a method for securely displaying data in an insecure environment is described. The method comprises: performing a biometric test to determine that a user is an authorised user, comprising: receiving, at a biometric sensor, biometric information from the user; determining that the user is an authorised user based at least in part on a comparison of the received biometric information with biometric information of one or more authorised users; in response to determining that the user is an authorised user, permitting the data to be displayed to the user on a private display device, the private display device being configured to enable the user to exclusively view the data thereon.

The method may comprise repeating the biometric test to determine that the authorised user is still using the private display device.

The method may comprise in response to determining that the user is not an authorised user, prohibiting the data from being displayed to the user.

The method may comprise: receiving a request to view the data; determining if the data is considered to be confidential data; and/or in response to determining that the data is considered to be confidential data, permitting the data to be displayed to the user on the private display device.

The method may comprise: in response to determining that the data is considered to be confidential data, permitting the data to be displayed to the user on the private display device and prohibiting the data from being displayed on an open display device. The method may comprise: in response to determining that the data is considered to be non-confidential data, permitting the data to be displayed to the user on the private display device and/or the open display device. The open display device may be configured to enable the user to non-exclusively view the data.

The method may comprise: determining that the user is an authorised user based at least in part on a comparison of security information received at a further security input device with authorisation information of one or more authorised users; permitting display of the data on the private display device if the user is determined to be an authorised user; and/or prohibiting display of the data to the user if the user is determined to not be an authorised user.

The method may be computer-implemented.

According to another aspect, a computer program product is described. The computer program product comprises instructions which, when the program is executed by a computer cause the computer to carry out the steps of a method as described above.

According to another aspect, there is described a computer-readable storage medium. The computer-readable storage medium comprises instructions which, when executed by a computer, cause the computer to carry out the steps of a method as described above.

According to another aspect, there is provided a computer configured to carry out a method comprising the steps of: performing a biometric test to determine that a user is an authorised user, comprising: receiving, at a biometric sensor, biometric information from the user; determining that the user is an authorised user based at least in part on a comparison of the received biometric information with biometric information of one or more authorised users; in response to determining that the user is an authorised user, permitting the data to be displayed to the user on a private display device, the private display device being configured to enable the user to exclusively view the data thereon.

The above features may be combined as appropriate, as would be apparent to the skilled person, and may be combined with any of the aspects of the examples described herein.

### DESCRIPTION OF THE DRAWINGS

One or more embodiments of the invention will be described with reference to the following drawings, in which:
Figure 1 is a block diagram of a system for displaying confidential data to a user according to an embodiment of the invention;
Figure 2 is an example of an exclusive display device for use in the system of Figure 1;
Figure 3 is a flow chart illustrating a method for displaying confidential data to a user according to another embodiment of the invention; and
Figure 4 is a flow chart illustrating additional method steps for determining that a user is permitted to view confidential data in accordance with an embodiment of the invention.

### DESCRIPTION OF THE INVENTION

The present invention relates generally to a method and system which enable a user to view sensitive or confidential material such as, for example classified information, in an environment which is insecure and in which onlookers may inadvertently view or attempt to view the classified information, particularly if the user is not present or is not aware of the onlooker.

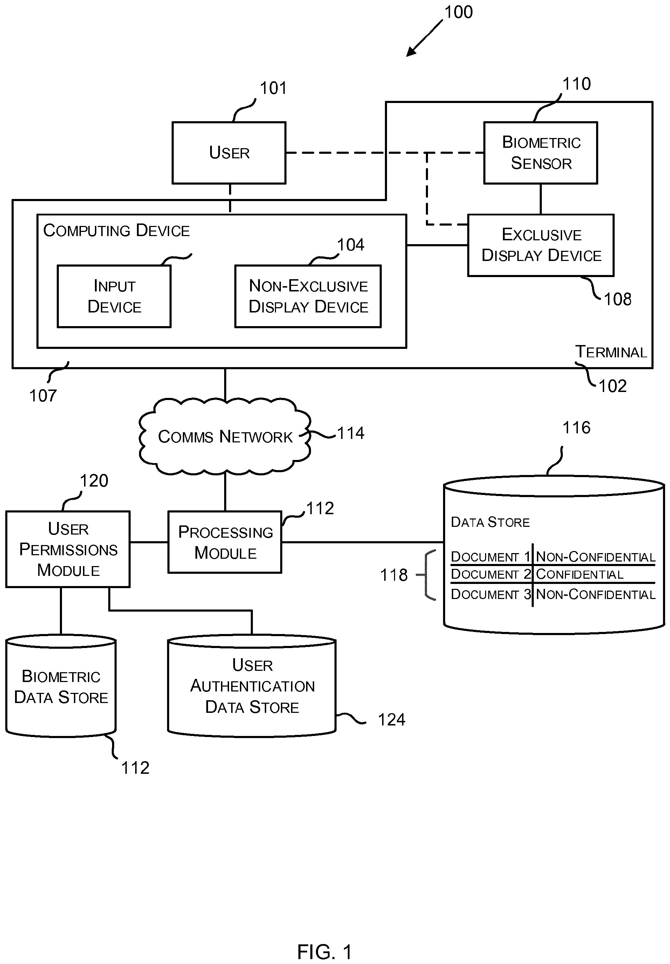

Figure 1 is a block diagram that depicts an exemplary system for securely displaying data to a user, and for restricting access to this data for individuals that are not entitled to see the data. This may be based on a national classification for secure information or may relate to commercially sensitive data which may only be accessed by certain individuals. The system is particularly suited to displaying the data to the user in public and/or uncontrolled environments. For example, in collaborative working spaces or open plan offices, it is likely that a work terminal's display device, such as a monitor or laptop/tablet screen will be visible to a number of viewers other than the user. As a result, data displayed on the device may be visible to viewers that are entitled to view the material, for example individuals who do not have the required level of clearance and who are not permitted to use the system. This may lead to the data becoming compromised. For convenience, the data for which access is to be restricted in referred to herein as "confidential data".

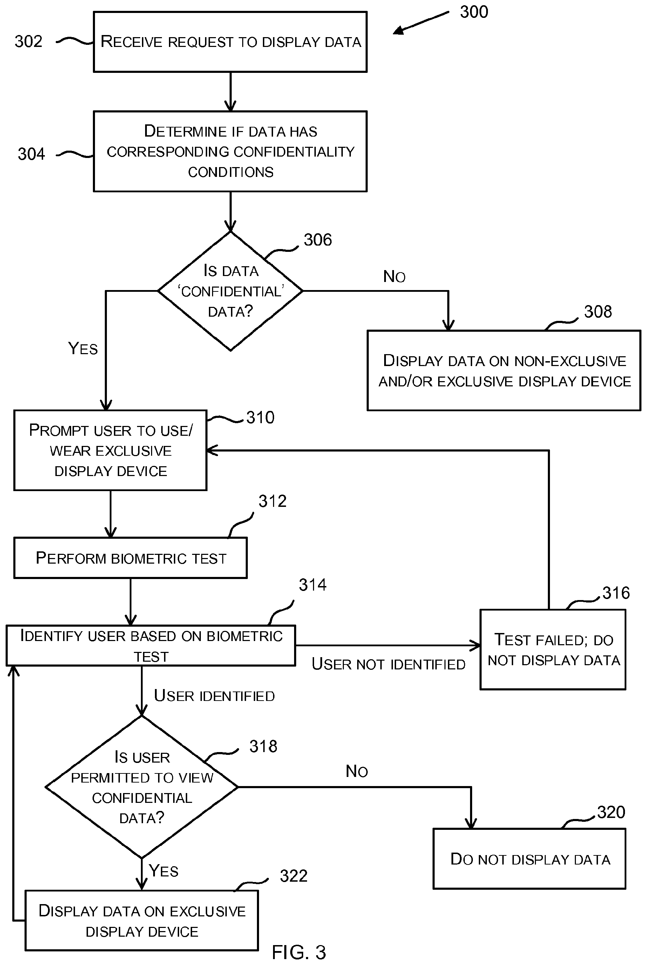

The system of Figure 1 operates to reduce the risk of inadvertent exposure of confidential data to unauthorised viewers by employing a biometric verification process to check the requested user is authorised to view confidential data, and by requiring confidential data to be viewed using targeted display equipment that restricts the broadcast of information to a single user. For example, the system operating according to the methodologies discussed below in Figure 3 requires a user to view confidential data on a headset or other appropriate device, which permits only the wearer to view the data. The system may also act to determine the user's authorisation using additional means, and may operate to differentiate between confidential and non-confidential data.

Returning to Figure 1, a system 100 is shown, with which a user 101 able to interact. The user 101 interacts with a user terminal 102 to initiate actions such as requesting to view, and viewing, data in the form of documents, images, or other forms. The terminal 102 includes a first, non-exclusive display device 104, typically a user's monitor or laptop/tablet screen, at least one input device 106, and a second, exclusive display device 108. The non-exclusive display device 104 and exclusive display device 108 may also be referred to as open display device 108 and private display device 104 respectively. The non-exclusive display device 104 and the input device 106 are part of a computing device 107. The exclusive display device 108 connects to the computing device 107 for connection to the wider system, although it will be appreciated that the exclusive display device 108 may connect directly to the wider system. The exclusive display device 108 includes a biometric sensor 110. Although not shown here, a biometric sensor may form part of the terminal 102 in addition to or instead of the biometric sensor 110 of the exclusive display device 108. Further sensors may be incorporated either within the terminal 102 or more specifically within the exclusive display device 108. The terminal 102 may incorporate a number of other modules or units, in the form of additional output devices, sensors, or processing units although for clarity these are not depicted in Figure 1.

It will be appreciated that the modules of Figure 1 are by way of example, and that the shown architecture and arrangement of these modules is not intended to be limiting. The modules may be arranged differently depending upon the requirements of the user and/or system without departing from the scope of the present invention.

To expand on the terminal 102 and its components, it is envisaged that the computing device 107 may be a conventional desktop or tablet computer coupled to the exclusive display device 108.

The non-exclusive display device 104 discussed throughout this application is considered to be a main display used by a user to perform operations and view documents, images, videos, etc. The main display may be able to be viewed by the public (viewers other than the user), regardless of whether it is being used by the user or not, because of its outwardly-facing nature, as is the case for a conventional monitor. While particular measures may have been taken with the non-exclusive display device 104 to restrict the viewing angle, such as by applying a screen filter, a casing, or positioning the monitor against a barrier, it is still considered to be public, or at the very least 'semi-public', because even with measures to restrict viewing angle, a viewer other than the user may be able to position themselves to view the non-exclusive display device 104, and particularly may be able to position themselves to view the non-exclusive display device 104 without the knowledge of the user.

In contrast, the exclusive display device 108 of Figure 1 is a private display device that can be exclusively viewed by a single viewer at any one time, such that if the user is using the exclusive display device to view confidential data there is no possibility that a second viewer can view the data, or at least, there is no possibility that a second viewer can view the data being displayed without the knowledge of the user. The exclusive display device 108 may be substantially enclosed. For example, a particular example of an exclusive display device 108 may be a binocular, wearable, head-mounted display, especially one having complete enclosure from the external environment using a casing or covering extending around the display and/or the user's head. Alternatively, the exclusive display device 108 may be an optical head-mounted display having selective shielding and a screen onto which the data is projected. Alternative exclusive display devices 108 include: helmet mounted displays; a monocular head-mounted display; or a virtual retinal display. Other head-mounted, wearable, and/or static devices viewable by a single viewer may also be used as the exclusive display device.

As discussed above, one or more biometric sensors 110 may be associated with the exclusive display device 108. The biometric sensor 110 gathers biometric information about the user 101 of the exclusive display device 108 by performing a biometric test.

In the case of a head-mounted display, the biometric sensor 110 may comprise a retinal recognition system, iris recognition system, an interpupillary distance (IPD) sensor, or other suitable optical biometric technique. Other suitable biometric sensors 110 may make use of facial recognition techniques, particularly using the peri-orbital, nasal, and frontal regions of the face, to determine or confirm the identity of a user. A plurality of biometric sensors 110 may also be incorporated, to provide more than one biometric test. Alternatively, the biometric sensor 110 may be associated with the exclusive display device 108 by being mounted on the device. For example, a fingerprint scanner may be mounted to one or each side of the display device 108 to permit a biometric test to be performed.

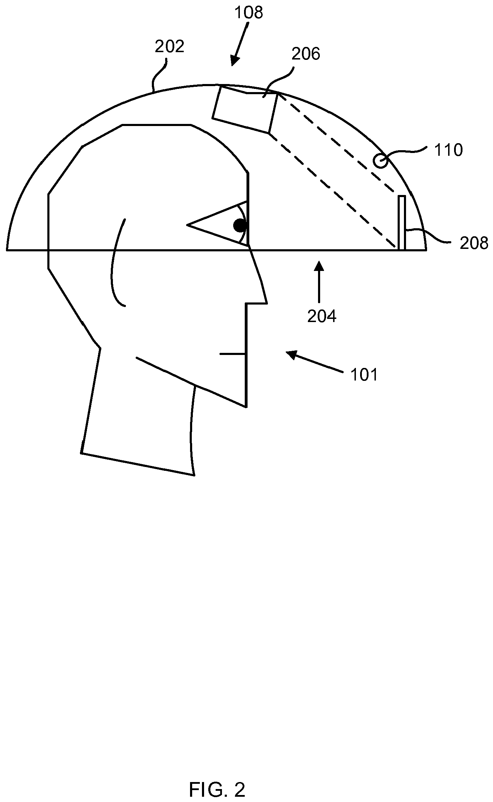

Figure 2 shows an example of an exclusive display device 108 including a biometric sensor 110 being worn by a user 101. The display device 108 is in the form of a helmet worn by the user 101 and, although shown in profile here, the helmet is enclosed around the outer surface 202, with the lower surface 204 left open to allow the user 101 to wear the helmet. The degree to which the helmet is enclosed depends of the nature of the closure and needs to be sufficient to prevent other viewers in the vicinity of the user being able to view the display screen when the helmet is worn by the user.

The exclusive display device 108 incorporates a projector 206 and a screen 208. The projector 206 projects information received from processing module 112 onto the screen 208 to permit the user 101 to view data. The screen 208 is placed within the helmet's outer surface 202 so that it is shielded from external viewers. The screen 208 is positioned within the user's field of view so that data projected onto it can only be easily read by the user.

The biometric sensor 110, here shown in the form of a retinal scanner, is mounted to the exclusive display device 108, and within the helmet's outer surface 202. The biometric sensor 110 is optimally positioned to perform the relevant biometric testing. It will be appreciated that the biometric sensor 110 may be mounted beneath the helmet, or externally of the helmet, provided that it is able to perform the function of receiving biometric information from the user. For example, in some embodiments, the biometric sensor 110 may be a fingerprint sensor on the outer surface 202 of the helmet.

Returning to Figure 1, an external, alternative or additional biometric sensor (not shown in Figure 1) may be provided in the terminal 102, and may comprise a facial recognition system, a voice recognition system, a fingerprint recognition system, or any other time of biometric sensor. Biometric sensors 110 mounted to the exclusive display device 108 may be used in combination with biometric sensors 110 mounted externally to the exclusive display device 108.

In some embodiments, further sensors (not shown in Figure 1) are incorporated into the terminal 102, and particularly into the exclusive display device 108. For example, to monitor whether the exclusive display device 108 is being worn or used, a touch sensitive rim may be included, or a motion sensor. These sensors may be used in combination with the biometric sensor 110 or alone.

Continuing from the terminal 102, the system 100 incorporates a processing module 112 to which the computing device 107 is connected. The processing module 112 is shown here as being separate from the terminal 102 and joined to the computing device 107 by a communications network 114, such as a local network, or the internet. In alternative embodiments, the processing module 112 may be disposed partially or fully within the terminal 102 or computing device 107.

The processing module 112 is connected to a data store 116. The processing module 112 is able to retrieve data from and write/store data to the data store 116 when requested by the user 101. The data store 116, which may be in the form of a database or file system or may be a combination of both, stores data in the form of documents, emails, images etc. The data 118, as shown in Figure 1, has an associated security level or is restricted in some way or another.

In the present embodiment, data has associated and corresponding security or confidentiality conditions that result in categorisation into one of two categories: non-confidential and confidential. In this embodiment, data that is requires a user to be authorised for interacting with confidential data, while data that is non-confidential can be viewed by any user, regardless of their authorisation. As previously mentioned the present invention is particularly dealing with nationally classified data but it will be appreciated that different types of security measure may be the reason for wishing to restrict data relating to one user from other users.

In other embodiments, a plurality of data security levels and user authorisation levels may be introduced, whereby a user having a particular authorisation level can view data with a comparable security level and all data having a 'lower' security level. In other words, in a system that has 6 security levels, where all users can view security level 1, a user having a security level of 4 can access all data having a security level selected from security levels 4 and the levels beneath 4, i.e. 1, 2, and 3, but is restricted from accessing data whose security level is 5 or 6. Therefore, the use of data security levels and their comparison with user security levels may be considered to be a tiered thresholding operation, whereby comparison of data is carried out to ascertain the required action.

A permissions system may also be set up to distinguish between data sets, and it will be appreciated that the system and methods described herein are applicable to that form of permissions system, and to any other permissions system that distinguishes between at least two forms of data.

The processing module 112 is also in communication with a user permission module 120. The user permissions module 120 operates to identify the user and/or verify the identity of the user 101. The user permissions module 120 is operable to retrieve user biometric information from a biometric data store 122, or retrieve user authentication data from a user authentication data store 124, or both, to compare against data received from the user using the sensors and/or input devices at the terminal 102. For example, a user may provide a username and password, causing the processing module 112 to request the user permissions module 120 to verify the identity of the user 101. The user permissions module 120 will find the corresponding entry in the user authentication data store 124, and to compare the received password with the stored password. When receiving biometric information, the user permissions module 120 compares the biometric information with stored biometric information in the data store 122 to determine whether the user is authenticated or not. Authentication using biometric information will be discussed in more detail later.

It will be appreciated that although three separate data stores are shown, the information in each may be stored in a combined data store, accessible by both the permissions module and the processing module.

In some circumstances, the user permissions module 120 may retrieve and compare data from the data store(s) 122, 124 and proceed to determine a security level associated with the user 101. Alternatively, the user permissions module 120 may already know the user's identity and may operate as part of the security process to identify whether the user 101 is permitted to view confidential data.

The permissions module 120 communicates with the processing module 112 to confirm a user's identity or their security level as required. The processing module 112 is then configured to use information provided from the user permissions module 120 and to compare the user's security level to data security levels or thresholds to determine an action to take subsequently.

If a user is able to access the data by virtue of their security level, then the processing module will operate accordingly to display the data to the user as will now be described.

Figure 3 provides a method 300 or security process to determine how requested data is displayed to a user. Initially, the user 101, via the input device 106 at the terminal 102, requests to view data 118 stored within the data store 116. This is received as a request to view data, see block 302.

The request is carried out by the processing module 112, which retrieves the data or otherwise reads the data in order to determine if the data has corresponding security or confidentiality conditions, at block 304. In particular, any information associated with the data that may be used to determine how the data should be treated, and whether confidentiality requirements are to be met, is gathered. While this determination may be based on an assigned 'security level' in some embodiments, in others there may be two or more factors that are required to decide.

At block 306, the processing module 112, following its determination, decides whether the data is considered to be confidential data or not based on the information gathered in the determination of the previous block 304. An action can then be performed accordingly.

If the data is not considered to be confidential ('no' after block 306), then the processing module 112 permits public, uncontrolled viewing of the data. The data can be displayed on either the non-exclusive or exclusive display device 104, 108, depending upon user preference and/or the setup of the system 100. The user 101 may also be prompted to select a device on which to view the data. At block 308, the data is displayed on the non-exclusive and/or exclusive display device 104, 108. As the data is now being displayed, the method 300 terminates.

If the data is considered to be confidential data ('yes' following block 306), then an authorised user will be required to use the exclusive display device 108 to view the data. To determine if the user is authorised to view confidential data, a biometric test is required to gather biometric information relating to the user 101. At block 310, the user 101 is prompted to wear the exclusive display device 108 in preparation for the biometric test and for subsequently viewing the data if the test is successful. The prompt may be delivered via the non-exclusive display device 104, the exclusive display device 108, or via an alternative output device such as a speaker or earpiece (not shown in Figure 1). The prompt may be an optional step.

Following the prompt, the biometric test is performed using the biometric sensor 110, block 312. In this embodiment, it is assumed that the biometric sensor 110 is contained within the exclusive display device 108, so the biometric test performs a dual function; the user's identity can be determined and/or checked, and the system 100 can confirm that the user 101 is actually wearing the device 108. Optionally, wear sensors or a user interaction via one or more of the input devices may also be used to determine that the user is wearing the device 108 before the biometric test is initiated. This option may be particularly useful where the biometric sensor is external to the exclusive display device, to ensure that the correct user is present.

The biometric test receives data input from the biometric sensor 110, which is used by the processing module 112 and permissions module 120 to identify the user 101, a step found at block 314 of the method 300. The identification of the user 101 may be performed by comparison of the biometric data to all other entries in the biometric data store 122 in order to find a match.

If a match is not found ('user not identified'), the test is failed and the user cannot be identified. The system 100 cannot allow the user 101 to view the data and so prohibits the display the data, as shown at block 316, and so the data is not displayed. The method 300 returns to block 310, and the user 101 is prompted again to submit to the biometric test via the exclusive display device 108. In some embodiments, a repeat of the process may require a different type of biometric data to be submitted. Alternatively, where the user's identity is known or ascertained using a permissions process, the relevant data can be obtained prior to the biometric test to allow a comparison to be performed.

If the user is identified based on the biometric test, the permissions module is able to use data stored in the biometric data store or access the user authentication data store to determine whether the user is permitted to view confidential data. At the next step of the method, block 318, it is decided whether the user is permitted to view the requested data, based on the biometric data and the previous steps 312, 314.

If the user's security level is determined to be inadequate to allow the user to access confidential data, then the process moves to block 320, where the data is prohibited from being displayed, and so is not displayed to the user at all. The process then terminates.

Further actions may be taken following block 320. For example, the user may be alerted that they do not have the correct permissions. The system 100 may alternatively or also alert an administrator for the confidential data that a user with an inadequate security level was attempting to access the data. Alternatively, the method 300 may return to block 310, and the user may be prompted once again to wear the exclusive display device 108 to submit to the biometric test, or to block 312, where the biometric test is performed again. In a yet further embodiment, the method 300 may also incorporate the user 101 being requested to submit alternative biometric data.

If the user 101 is cleared to access confidential data, the next block 322 in the method 300 is to display the data to the viewer via the exclusive display device 108. As the user 101 is already wearing the exclusive display device 108 following the biometric test, the likelihood of an external viewer gaining access to the data is minimised.

Following this block, the biometric test is repeated as necessary (the method 300 loops back to block 312), to ensure that the user 101 is the same user as the method 300 was initially performed on, and that they are continuing to use the exclusive display device 108. If the user 101 leaves the terminal 102, the repeat of the biometric test will fail, leading to block 316 and the data not being displayed. This provides a safety mechanism against a second, non-cleared user attempting to view the data by using the exclusive display device 108 when the first, cleared user 101 has temporarily vacated the terminal 102 and the secure viewing option is active. The repeat may be periodic or may be in response to receiving additional data from a sensor.

So, for instance, user 101 may request to view document 1 from the data store 116, which, as shown in Figure 1, has an associated entry in the data store denoting that it is non-confidential data. Following the method of Figure 3, the request is received, the data is determined to have associated information denoting that it is a non-confidential document. Based on block 306, the answer is 'no', and so document 1 is permitted to be displayed on either device 104, 108 at block 308.

If the user 101, who is authorised to view confidential documents, wishes to view document 2, which has an entry in the data store denoting that it is to be treated as confidential data, the answer to block 306 is 'yes'. A biometric test is required at block 312. The user 101 uses the exclusive display device 108, the biometric test is performed, and biometric information is gathered and transferred to the processing module 112. The entry for the user 101 is found, and the system is able to determine that the user 101 is permitted to view confidential data. As a consequence, the data is displayed on the exclusive display device only (block 322), and displaying the data on the non-exclusive display device is prohibited.

The security process described by the method 300 is useful in ensuring that the user of the exclusive display device 108, and therefore the viewer of the confidential data, is an authorised user and that they continue to be an authorised user. If a non-authorised user attempts to access the data, failure of the biometric test protects the confidentiality of the data, and leads to non-display of the data. A higher level of security is therefore achieved by the above method 300.

In some embodiments, a further level of security may be incorporated by requiring authentication of the user by non-biometric means. For example, as discussed in Figure 1, username and password data may be stored in the user authentication data store, and this may be utilised in a security process of the invention.

In particular, the process shown in Figure 3 may be augmented with additional steps to determine the user's identity and/or whether they are permitted to view the confidential data.

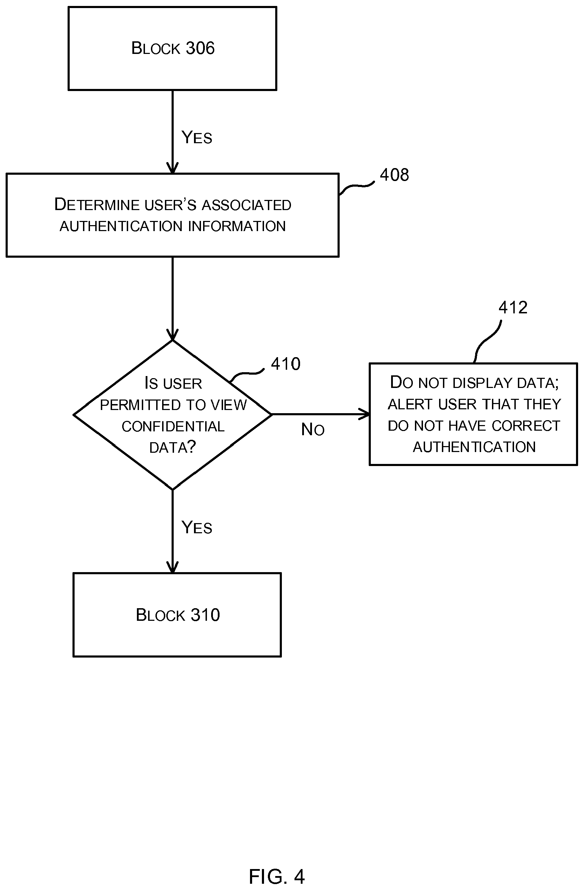

A particular example is shown in Figure 4. In this case, the additional steps shown are performed between blocks 306 and 310, i.e. the non-biometric, security tests are performed before the prompt for the biometric test, but after determination of whether the data is confidential or not. In other examples, the security tests may be performed prior to the request to display data, after the biometric test, or at any other point in the security process as required. In Figures 3 and 4, the order in which the steps are carried for allowing a user to have access to the confidential data can be varied from the examples shown, assuming these changes do not negatively impact the security provisions of the system. The security tests may be performed using a security input device, which may comprise the input device of the computer device, or a sensor or other input device of the terminal.

As shown in Figure 4, at block 408, which follows block 306, the user's associated authentication information is determined. In a similar manner to determining any associated confidentiality conditions associated with the requested data, this may involve one or more steps. It may involve requesting a username and password from a user, a password only, and/or reading information relating to the user from the user authentication data store. The user can then be identified and information associated with that user and related to confidentiality of data may be read.

At the next block 410, a determination is made if the user is permitted to view confidential data, based on their determined authentication information. In a similar manner to the determination of the data being confidential or non-confidential, this determination may be based on the comparison of user-associated authentication information with predetermined information, for example comparing a security level with a threshold.

In the circumstance that the user is not permitted to access the requested ('No' in response to block 410) confidential data (the data already having been determined to be confidential at block 306), then the user is prohibited from viewing the data on either display device 104, 108. At block 412 the processing module displays, via the non-exclusive and/or exclusive display device 104, 108, that the user does not have the required authentication information/is not permitted to view the requested data. The data is not displayed and the method 300 terminates.

If the user 101 does have permission to view the data ('Yes' in response to block 410), then the security process continues to block 310, and the process continues as above.

Importantly, incorporating both a non-biometric permissions test and a biometric test allows for identification of the user and filtering of non-identifiable users prior to the biometric test, resulting in a potentially faster biometric test.

As with the biometric test alone, the non-biometric permissions test and biometric test also enable an authorised user to view confidential data and to leave their terminal without the danger of a non-authorised user gaining access to the confidential data. The non-biometric test initially grants access to the data, while the biometric test continues to ensure that the user is the correct, authorised user. As the authorised user is still 'logged on', so to speak, the speed of re-performing the biometric test may be increased as the system already has a user identity and biometric information against which submitted biometric information can be compared.

A number of other features may be incorporated. According to some embodiments of the invention, a plurality of biometric and non-biometric tests are performed together to provide a high level of user authentication. The requirement for or the number of biometric and/or non-biometric tests required may be related to how many confidentiality conditions may be associated with the data, and the different categories of authentication information that may be gained from the user.

For example, in one embodiment, three levels of data are present, where any user may be able to view first level data. For a user having the required permissions to view all three levels of data, a password may be required to view second level data (i.e. the process of Figure 3 is carried out), while biometric data may be required to view third level data. In a similar embodiment, second level data may require a password only, while third level data may require a password and biometric data in combination.

In some embodiments, a further security measure may be implemented that is performed prior to the display of data on the exclusive display device. The further security measure may involve identifying the exclusive display device to ensure that the exclusive display device does display data to a single user only. For example, using an appropriate handshake protocol between the exclusive display device and the processing module or requiring an appropriate descriptor from the exclusive display device before display ensures that the exclusive display device is the correct device. This avoids the potential that a second monitor may be used in place of the exclusive display device. Alternatively, or additionally, data may be encrypted by the processing module and transmitted to the private/exclusive display device in the encrypted form. The private display device may include decryption means, in the form of a decryption module or software, and may decrypt the data using the biometric information, authorisation information and/or sensor information as part of a decryption key. The transmission of encrypted data would be particularly useful where the exclusive display device is a wireless device, connected to the rest of the system by an appropriate network connection.

In some embodiments of the system of Figure 1, a plurality of exclusive display devices may be incorporated into the system. One or more may include biometric sensors. In some circumstances, viewing of data on the plurality of devices may be regulated by an authorised viewer using one of the plurality of devices. Where a plurality of exclusive devices are used, or where only one exclusive device is used, a non-exclusive display device may be optionally incorporated.

In some embodiments including one or a plurality of exclusive display devices, the exclusive display device(s) may be positioned within a workspace. A user may be able to use the exclusive display device at will and upon using the device, the system determines which data is permitted to be displayed to the user based on their biometric information received at the biometric sensor.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality. In the claims, the term 'comprising' or "including" does not exclude the presence of other elements.

## Claims

1. A system for securely displaying data in an insecure environment, the system comprising:
a private display device for displaying the data and configured to enable a user to exclusively view the data thereon;
a biometric sensor associated with the private display device and configured to receive biometric information from the user; and
a processing module configured to:
determine that the user is an authorised user based at least in part on a comparison of the biometric information received at the biometric sensor with biometric information of one or more authorised users; and
permit the data to be displayed to the user on the private display device if the user is determined to be an authorised user.

2. The system of claim 1, wherein the private display device includes the biometric sensor.

3. The system of claim 1 or claim 2, wherein the biometric sensor is selected from:
a retinal scanner; an iris scanner; and an interpupillary distance sensor.

4. The system of any preceding claim, wherein the processing module is configured to prohibit the data being displayed to the user if the user is not determined to be an authorised user.

5. The system of any preceding claim, wherein the processing module is configured to:
receive a request to view the data;
determine if the data is considered to be confidential data; and
in response to determining that the data is considered to be confidential data, permit the data to be displayed to the user on the private display device.

6. The system of claim 5 further comprising an open display device for displaying the data and configured to enable the user to non-exclusively view the data, wherein the processing module is configured to:
in response to determining that the data is considered to be confidential data, permit the data to be displayed to the user on the private display device and prohibit the data from being displayed on the open display device; and
in response to determining that the data is considered to be non-confidential data, permit the data to be displayed to the user on the private display device and/or the open display device.

7. The system of claim 6 further comprising a computing device that includes the open display device, wherein:
the computing device is in communication with the processing module; and
the private display device is in communication with processing module via the computing device.

8. The system of any preceding claim further comprising a data store that stores data for viewing on the private display device and that is accessible to the processing module to enable data to be retrieved and displayed to the user.

9. The system of any preceding claim further comprising a biometric data store having the biometric information of one or more authorised users, the biometric data store being accessible to the processing module to enable comparison of received and stored biometric information.

10. The system of any preceding claim further comprising a further security input device configured to receive further security information, wherein the processing module is configured to:
determine that the user is an authorised user based at least in part on a comparison of the security information received at the security input device with authorisation information of one or more authorised users;
permit display of the data on the private display device if the user is determined to be an authorised user; and
prohibit display of the data to the user if the user is determined to not be an authorised user.

11. The system of any preceding claim, wherein the private display device comprises a substantially enclosed head-mounted display.

12. A method for securely displaying data in an insecure environment, the method comprising:
performing a biometric test to determine that a user is an authorised user, comprising:
receiving, at a biometric sensor, biometric information from the user;
determining that the user is an authorised user based at least in part on a comparison of the received biometric information with biometric information of one or more authorised users;
in response to determining that the user is an authorised user, permitting the data to be displayed to the user on a private display device, the private display device being configured to enable the user to exclusively view the data thereon.

13. The method of claim 12, further comprising:
receiving a request to view the data;
determining if the data is considered to be confidential data; and
in response to determining that the data is considered to be confidential data, permitting the data to be displayed to the user on the private display device.

14. The method of claim 13 further comprising:
in response to determining that the data is considered to be confidential data, permitting the data to be displayed to the user on the private display device and prohibiting the data from being displayed on an open display device; and
in response to determining that the data is considered to be non-confidential data, permitting the data to be displayed to the user on the private display device and/or the open display device, wherein:
the open display device is configured to enable the user to non-exclusively view the data.

15. The method of any of claims 12 to 14, further comprising:
determining that the user is an authorised user based at least in part on a comparison of security information received at a further security input device with authorisation information of one or more authorised users;
permitting display of the data on the private display device if the user is determined to be an authorised user; and
prohibiting display of the data to the user if the user is determined to not be an authorised user.
